**Europäisches Patentamt**

**European Patent Office**

**Office européen des brevets**

(11) Veröffentlichungsnummer: **0 170 994**
**B1**

(12) **EUROPÄISCHE PATENTSCHRIFT**

(45) Veröffentlichungstag der Patentschrift:
31.05.89

(51) Int. Cl.⁴: **G 06 F 13/36**

(21) Anmeldenummer: **85109384.9**

(22) Anmeldetag: **26.07.85**

(54) Schaltungsanordnung für Fernmeldevermittlungsanlagen, insbesondere Fernsprechvermittlungsanlagen, mit an einer Datenbusleitung anschaltbaren zentralen und/oder teilzentralen Schalteinrichtungen.

(30) Priorität: 31.07.84 DE 3428233

(43) Veröffentlichungstag der Anmeldung:
12.02.86 Patentblatt 86/7

(45) Bekanntmachung des Hinweises auf die Patenterteilung:
31.05.89 Patentblatt 89/22

(84) Benannte Vertragsstaaten:
**AT BE CH DE FR GB IT LI NL SE**

(56) Entgegenhaltungen:
**DE-A-3 136 355**
**FR-A-2 231 050**

**TELCOM REPORT, Band 4, 1981, Beiheft Digitalvermittlungssystem EWSD, Seiten 33-37, München, DE; H. BERNDT: "SSP 112D-mikroelektronisches Zentralsteuerwerk für Digitalkommunikationssysteme"**
**IBM TECHNICAL DISCLOSURE BULLETIN, Band 24, Nr. 1B, Juni 1981, Seite 606, New York, US; G.R. ALSPAUGH et al.: "Data-dependent channel-access method"**

(73) Patentinhaber: **Siemens Aktiengesellschaft Berlin und München, Wittelsbacherplatz 2, D-8000 München 2 (DE)**

(72) Erfinder: **Eher, Manfred, Regerplatz 4, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Schaltungsanordnung für Fernmeldevermittlungsanlagen, insbesondere Fernsprechvermittlungsanlagen, mit zentralen und/oder teilzentralen Schalteinrichtungen, zum Beispiel Prozessoren, Speichern, Teilsteuerwerken und Puffereinrichtungen für dezentrale Steuerwerke, die zu gegenseitiger Übertragung von Daten an eine gemeinsame Datenbusleitung anschaltbar sind, und deren Anschaltung aufgrund von von jeweils einer der Schalteinrichtungen abgegebenen Busanforderungssignalen von einem der Datenbusleitung zugeordneten Buszuteiler gesteuert wird, und die außer einem Zeitbedarf für die Abgabe sowie für die Aufnahme von über die Datenbusleitung übertragenen Daten einen Datenverarbeitungs-Zeitbedarf für interne Verarbeitungsvorgänge, zum Beispiel Verknüpfungsvorgänge in Prozessoren sowie Schreib- und Lesevorgänge in Speichern sowie Steuerungsabläufe in Teilsteuerwerken sowie Sende- und Empfangsvorgänge für abgesetzte dezentrale Steuerwerke, aufweisen.

Eine Schaltungsanordnung dieser Art ist durch die Zeitschrift "telcom report", 4. Jahrgang (1981), Beiheft, Seiten 33 bis 37, bekannt. In Schaltungsanordnungen dieser Art kann das Problem auftreten, daß nach einem Datenaustauschvorgang zwischen zwei Schalteinrichtungen interne Verarbeitungsvorgänge in einer dieser Schalteinrichtungen noch nicht abgewickelt sind, wenn bereits eine der übrigen Schalteinrichtungen einen erneuten Datenaustauschvorgang mit der betreffenden Schalteinrichtung durch Anforderung des Datenbusses vorbereitet, und wenn dieser bereits zugeteilt wird, wenn der interne Verarbeitungsvorgang noch nicht abgewickelt ist. In einem solchen Betriebsfall ist es erforderlich, daß der erneute Datenaustauschvorgang erst gestartet werden kann, wenn der interne Verarbeitungsvorgang abgeschlossen ist. Hieraus ergeben sich unerwünschte Wartezeiten, und zwar sowohl für diejenige Schalteinrichtung, die die Zuteilung des Datenbusses angefordert hat, als auch im Hinblick auf die Inanspruchnahme und Verfügbarkeit des Datenbusses selbst.

Für die Erfindung besteht die Aufgabe, in einer Schaltungsanordnung der eingangs angegebenen Art dafür zu sorgen, daß ohne eine Beschleunigung der genannten internen Verarbeitungsvorgänge die Ausnutzung der teilzentralen Schalteinrichtungen sowie des Datenbusses gesteigert wird.

Die Erfindung löst die gestellte Aufgabe dadurch, daß dem Buszuteiler zusammen mit einem Busanforderungssignal ein jeweils die Art der zu übertragenden Daten angebendes Kennzeichen gegeben wird, daß in dem Buszuteiler in Zuordnung zu den Schalteinrichtungen in Abhängigkeit von diesem Kennzeichen Angaben über den zeitlichen Ablauf von einzeln intern in den Schalteinrichtungen im Anschluß an jeweils einen Datenübertragungsvorgang stattfindenden Verarbeitungsvorgängen speicherbar sind, und daß der Buszuteiler bei der Zuteilung der Datenbusleitung an eine diese anfordernde Schalteinrichtung, welche Daten an eine andere Schalteinrichtung zu übertragen und/oder von ihr anzufordern, abzurufen und/oder zu empfangen hat, für diese andere Schalteinrichtung gespeicherte Angaben über den zeitlichen Ablauf von intern in ihr stattfindenden Verarbeitungsvorgängen auswertet und aufgrund dessen dieser angeforderten Zuteilung nach Maßgabe dieser Angaben zeitlich eine oder mehrere andere Zuteilungen so vorordnet, daß vor einer Übertragung der Daten an die andere Schalteinrichtung oder von der anderen Schalteinrichtung gleichzeitig einerseits der jeweilige interne Verarbeitungsvorgang in der anderen Schalteinrichtung und andererseits mindestens eine anderweitige Zuteilung für mindestens einen Datenübertragungsvorgang und dieser Datenübertragungsvorgang selbst abgewickelt wird.

Durch die Erfindung wird erreicht, daß Wartezeiten, die hinsichtlich der Informationsverarbeitungskapazität und Informationsübertragungskapazität der genannten Schalteinrichtungen und des Datenbusses einen Verlust darstellen, völlig in Fortfall gebracht werden.

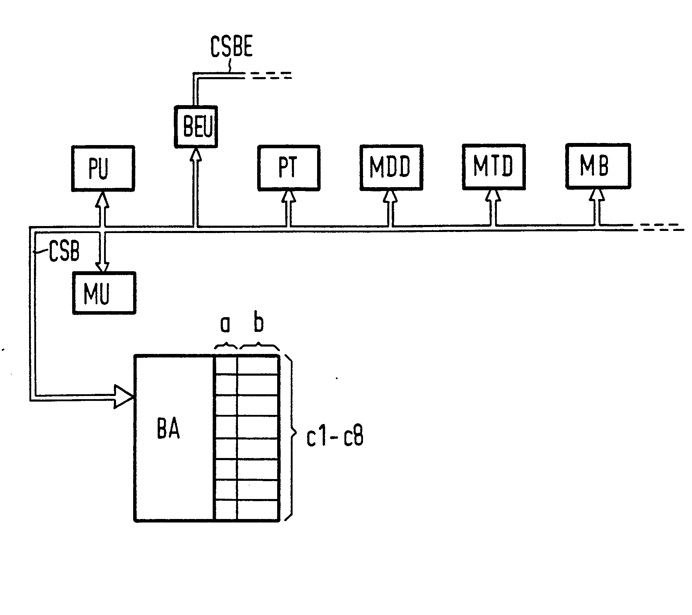

In der Zeichnung ist ein Ausführungsbeispiel der Erfindung nur in wesentlich zu ihrem Verständnis beitragenden Bestandteilen dargestellt.

Die Beschreibung setzt die in der genannten Zeitschrift gegebenen Darstellungen und Erläuterungen als bekannt voraus. Auch die Kurzbezeichnungen der einzelnen Elemente in der Zeichnung sind in Anlehnung an die Darstellung auf Seite 34 in der genannten Zeitschrift gewählt.

Es ist ein zentraler Systembus CSB vorgesehen, an den eine zentrale Speichereinheit MU und eine zentrale Verarbeitungseinheit PU und ferner zentrale Eingabe-Ausgabe-Prozessoren PT, MDD und MTD angeschlossen sind. Der Eingabe-Ausgabe-Prozessor PT möge den Eingabe-Ausgabe-Prozeduren für ein druckendes Dialoggerät dienen. Der Eingabe-Ausgabe-Prozessor MDD möge zur Abwicklung der Eingabe-Ausgabe-Vorgänge für einen Festplattenspeicher dienen. Der Eingabe-Ausgabe-Prozessor MTD dient einer Zusammenarbeit mit einem Bandgerät-Speicher. Ferner ist eine Buserweiterungseinheit BEU vorgesehen, über die ein Datenaustausch im Ersatzschaltefall bei Betriebsunterbrechung in einer zweiten, hier nicht dargestellten zentralen Verarbeitungseinheit abgewickelt wird. Ferner ist ein teilzentraler Eingabe-Ausgabe-Prozessor MB für einen Nachrichtenverteiler dargestellt. Dessen Bedeutung ist in der deutschen Patentschrift Nr. 3 106 903 (VPA 81 P 6209) im einzelnen erläutert. Die genannten Eingabe-Ausgabe-Prozessoren können zentrale Schalteinrichtungen, aber auch teilzentrale Schalteinrichtungen sein.

Die zuvor beschriebenen zentralen und teilzentralen Schalteinrichtungen, die an den zentralen Systembus angeschlossen sind, können über denselben in einen Datenaustausch miteinander treten. Dies ist im einzelnen in der genannten Zeitschrift beschrieben. Die Inanspruchnahme des zentralen Systembusses erfolgt also durch die genannten zentralen und teilzentralen Schalteinrichtungen; sie wird durch einen zentralen Buszuteiler BA geregelt.

Hat eine der zentralen oder teilzentralen Schalteinrichtungen einen Datenaustausch mit einer anderen dieser Schalteinrichtungen abzuwickeln, so fordert die betreffende Schalteinrichtung den zentralen Systembus beim Buszuteiler BA an. Dieser entscheidet zwischen gegebenenfalls gleichzeitig eintreffenden Busanforderungen. Die anfordernde Schalteinrichtung teilt ihre eigene Ansteueradresse sowie die Ansteueradresse derjenigen Schalteinrichtung dem Buszuteiler mit, mit der die anfordernde Schalteinrichtung in einen Datenaustausch treten möchte. Teilt dann der Buszuteiler den zentralen Systembus der jeweils anfordernden Schalteinrichtung zu, so bewirkt er in nicht dargestellter, weil an sich bekannter Weise die Anschaltung der betreffenden beiden Schalteinrichtungen mit Hilfe der genannten beiden Ansteueradressen. Dann erfolgt der erforderliche Datenaustausch. Dieser kann darin bestehen, daß die anfordernde Schalteinrichtung Daten an die andere Schalteinrichtung überträgt, oder daß sie in umgekehrter Richtung Daten von der anderen Schalteinrichtung anfordert. So kann zum Beispiel die zentrale Verarbeitungseinheit PU Daten von der zentralen Speichereinheit MU anfordern. Hierzu überträgt die zentrale Verarbeitungseinheit zunächst eine Adresse an die zentrale Speichereinheit und einen Befehl, die unter der betreffenden Adresse zu lesenden Informationen an die zentrale Verarbeitungseinheit zu übertragen. Ebenso können zwischen allen zentralen und/oder teilzentralen Schalteinrichtungen Daten übertragen werden, sei es daß die jeweils anfordernde Schalteinrichtung Daten an eine jeweils andere Schalteinrichtung überträgt, sei es daß die jeweils anfordernde Schalteinrichtung Informationen, zum Beispiel Adressen, an die jeweils andere Schalteinrichtung überträgt und dementsprechend eine Übertragung von Daten von der anderen Schalteinrichtung zu der anfordernden Schalteinrichtung in die Wege leitet.

Es kann nun der Fall eintreten, daß nach einer Übertragung von Daten zwischen zwei zentralen und/oder teilzentralen Schalteinrichtungen in beiden oder in einer von ihnen anschließend noch interne Verarbeitungsvorgänge erforderlich werden. So kann es bei einem Speicher zum Beispiel erforderlich sein, daß nach einer Übertragung von Daten an ihn die entsprechenden Schreibvorgänge noch abgewickelt werden müssen. Ebenso kann es auch nach einer Anforderung von Daten von einem Speicher und einer Übertragung dieser Daten von ihm zu einer anderen zentralen und/oder teilzentralen Schalteinrichtung erforderlich sein, daß innerhalb des Speichers noch eine Umordnung von gespeicherten Daten oder eine Löschung der gelesenen Daten erforderlich wird - bei einem zentralen Prozessor kann es zum Beispiel erforderlich sein, daß nach einer Aufnahme von Daten zunächst interne Verarbeitungsvorgäne, zum Beispiel Verknüpfungsvorgänge erforderlich sind, bevor der zentrale Prozessor erneut in Datenaustausch mit einer anderen Schalteinrichtung treten kann. Ebenso kann es für einen zentralen Prozessor nach einem Datenaustauschvorgang erforderlich sein, zunächst interne Prüfvorgänge abzuwickeln, bevor er erneut in Datenaustausch mit einer anderen Schalteinrichtung treten kann. Handelt es sich bei den erwähnten Schalteinrichtungen um Teilsteuerwerke, so kann es erforderlich sein, daß ein solches Teilsteuerwerk nach Empfang von Daten zunächst entsprechende Steuervorgänge abwickeln muß, bevor es erneut in einen Datenaustausch mit einer der anderen Schalteinrichtungen treten kann. Bei einem solchen Teilstuerwerk kann es sich zum Beispiel um eine Koppelfeldeinstelleinrichtung handeln. Sind ihr Einstelldaten für eine Verbindungsherstellung übertragen worden, so muß sie zunächst die betreffende Verbindungsdurchschaltung ausführen, bevor sie neue Koppelfeldeinstelldaten empfangen kann.- Handelt es sich bei den betreffenden Schalteinrichtungen um Puffereinrichtungen für dezentrale Steuerwerke, die also über einen Datenweg und die Puffereinrichtung zum Beispiel mit der zentralen Verarbeitungseinheit in Datenaustausch steht, so kann diese Puffereinrichtung nach einem Datenaustausch über das zentrale Bussystem erneut Daten über dasselbe erst dann aufnehmen, wenn eine dem ersten Datenaustausch entsprechende Datenübertragung zu dem betreffenden dezentralen Steuerwerk abgewickelt ist.

Wenn nun eine der Schalteinrichtungen in einen Datenaustausch mit einer anderen der Schalteinrichtungen treten will, so kann es sein, daß in dieser anderen Schalteinrichtung zunächst noch interne Verarbeitugsvorgänge der zuvor beschriebenen Art abgewickelt werden müssen, bevor diese andere Schalteinrichtung erneut in einen Datenaustausch mit einer andren Schalteinrichtung treten kann. Hierzu ist vorgesehen, daß in dem Buszuteiler BA in Zuordnung zu den Schalteinrichtungen Angaben über den zeitlichen Ablauf von einzeln intern in den Schalteinrichtungen stattfindenden Verarbeitungsvorgängen speicherbar sind.

Hierzu ist der Buszuteiler BA mit einem Speicher ausgestattet, der zum Beispiel acht Speicherzeilen c1 bis c8 umfaßt. Von diesen Speicherzeilen kann jeweils eine jeweils einer der genannten Schalteinrichtungen zugeordnet sein. Diese Zuordnung kann eine feste Zuordnung sein, kann aber auch eine Zuordnung mit Hilfe einer speicherbaren Adresse der jeweiligen Schalteinrichtung sein. Hierzu ist jede Speicherzeile außer mit einem Informationsfeld b mit einem Adreßfeld a ausgestattet. In dem Adreßfeld a kann die jeweilige Ansteueradresse einer jeden der verschiedenen Schalteinrichtungen gespeichert sein.

Die Zuteilung des zentralen Bussystems erfolgt aufgrund jeweils von einer der Schalteinrichtungen abgegebenen Busanforderungssignale. Dies wurde bereits zuvor erläutert. Es wird nun zusammen mit einem jeden Busanforderungssignal ein jeweils die Art der zu übertragenden Daten angebendes Kennzeichen an den Buszuteiler gegeben. Dieses Kennzeichen kann auch Bestandteil des Busanforderungssignales selber sein; in diesem Falle erkennt der Buszuteiler also aus dem speziellen Busanforderungssignal jeweils die Art der zwischen den betreffenden beiden Schalteinrichtungen zu übertragenden Daten. Aus diesem Kennzeichen vermag der Buszuteiler zu erkennen, ob und welcherlei interne Verarbeitungsvorgänge anschließend an den Datenübertragungsvorgang, für den der zentrale Systembus durch das Busanforderungssignal angefordert worden ist, noch abzuwickeln sind. Aus der jeweiligen Art noch abzuwickelnder Verarbeitungsvorgänge wird im Buszuteiler erkannt, welcher Zeitbedarf für den jeweiligen internen Verarbeitungsvorgang anschließend an den Datenübertragungsvorgang erforderlich ist. Der Buszuteiler speichert nun in Zuordnung zu der Schalteinrichtung, innerhalb der anschließend an den Datenübertragungsvorgang noch ein interner Verarbeitungsvorgang erforderlich ist, in Abhängigkeit von dem genannten Kennzeichen Angaben über den zeitlichen Ablauf eines intern in der betreffenden Schalteinrichtung im Anschluß an den jeweiligen Datenübertragungsvorgang stattfindenden Verarbeitungsvorgang. Es kann der Zeitpunkt des Beginnes des Datenübertragungsvorganges gespeichert werden, sowie Daten über den Zeitbedarf für den Datenübertragungsvorgang sowie für den anschließend intern stattfindenden Verarbeitungsvorgang. Ebensogut ist es auch möglich, ausgehend von dem Zeitpunkt des Beginnes des Datenübertragungsvorganges anhand des Zeitbedarfes für diesen und anhand des Zeitbedarfes für den intern stattfindenden Verarbeitungsvorgang eine Zeitangabe zu speichern, die einen Zeitpunkt markiert, zu dem der interne Verarbeitungsvorgang mit Sicherheit beendet ist.

Befindet sich also eine der Schalteinrichtungen in einem Datenaustausch mit einer anderen Schalteinrichtung und sind im Anschluß an den jeweiligen Datenübertragungsvorgang noch interne Verarbeitungsvorgänge in einer der Schalteinrichtungen abzuwickeln, so sind den Abschluß dieser internen Verarbeitungsvorgänge betreffende Angaben im Buszuteiler BA in Zuordnung zu der betreffenden Schalteinrichtung gespeichert.

Erhält nun der Buszuteiler ein Busanforderungssignal und in Zusammenhang damit die Adresse der anfordernden Schalteinrichtung und die Adresse der anderen Schalteinrichtung, mit der die anfordernde Schalteinrichtung einen Datenaustausch durchführen möchte, so wertet der Buszuteiler bei der Zuteilung der Datenbusleitung an die die Datenbusleitung anfordernde Schalteinrichtung, welche Daten an die andere Schalteinrichtung zu übertragen und/oder von ihr anzufordern, abzurufen und/oder zu empfangen hat, für diese andere Schalteinrichtung gespeicherte Angaben über den zeitlichen Ablauf der intern in ihr stattfindenden Verarbeitungsvorgänge aus. Mit Hilfe der Adresse der genannten anderen Schalteinrichtung prüft der zentrale Buszuteiler also innerhalb des genannten Speichers nach, ob für die betreffende Schalteinrichtung entsprechende Zeitangaben gespeichert sind. Trifft dies zu, so ist eine sofortige Zuteilung des zentralen Bussystems an die anfordernde Schalteinrichtung in diesem Zeitpunkt noch nicht möglich. Der zentrale Buszuteiler ordnet der zuvor beschriebenen angeforderten Zuteilung nach Maßgabe der gespeicherten Angaben zeitlich eine oder mehrere andere Zuteilungen vor. Hierzu kann vorgesehen sein, daß der zentrale Buszuteiler das erste Busanforderungssignal speichert, jedoch aufgrund der gespeicherten Angaben die angeforderte Buszuteilung zunächst nicht vornimmt sondern nacheinander weitere Busanforderungssignale empfängt und entsprechende Buszuteilungen vornimmt. Der Buszuteiler ordnet der zuerst angeforderten Zuteilung nach Maßgabe der gespeicherten Zeitangaben zeitlich eine oder mehrere andere Zuteilungen so vor, daß vor einer Übertragung der Daten an die andere Schalteinrichtung oder von der anderen Schalteinrichtung entsprechend der ursprünglichen Busanforderung gleichzeitig einerseits der jeweilige interne Verarbeitungsvorgang in der anderen Schalteinrichtung und andererseits mindestens eine anderweitige Zuteilung für mindestens einen weiteren Datenübertragungsvorgang sowie dieser Datenübertragungsvorgang selbst abgewickelt wird.

Statt daß der zentrale Buszuteiler das zuerst erhaltene Busanforderungssignal speichert, kann auch vorgesehen sein, daß er der betreffenden anfordernden Schalteinrichtung ein Signal zurückgibt, durch welches er diese veranlaßt, zu einem späteren Zeitpunkt erneut ein Busanforderungssignal abzugeben. Es kann vorgesehen werden, daß zusammen mit diesem vom zentralen Buszuteiler an die anfordernde Schalteinrichtung abgegebenen Signal eine Angabe über den Zeitpunkt zu übertragen, zu dem diese Schalteinrichtung das Busanforderungssignal erneut an den zentralen Buszuteiler übertragen soll.


**Patentanspruch**

Schaltungsanordnung für Fernmeldevermittlungsanlagen, insbesondere Fernsprechvermittlungsanlagen, mit zentralen und/oder teilzentralen Schalteinrichtungen (MU, PU, PT, MDD, MTD, MB), zum Beispiel Prozessoren, Speichern, Teilsteuerwerken und Puffereinrichtungen für dezentrale Steuerwerke, die zu gegenseitiger Übertragung von Daten an eine gemeinsame Datenbusleitung (CSB) anschaltbar sind, und deren Anschaltung aufgrund von von jeweils einer der Schalteinrichtungen abgegebenen Busanforderungssignalen von einem der Datenbusleitung zugeordneten Buszuteiler (BA) gesteuert wird, und die außer einem Zeitbedarf für die Abgabe sowie für die Aufnahme von über die Datenbusleitung übertragenen Daten einen Datenverarbeitungs-Zeitbedarf für interne Verarbeitungsvorgänge, zum Beispiel Verknüpfungsvorgänge in Prozessoren sowie Schreib- und Lesevorgänge in Speichern sowie Steuerungsabläufe in Teilsteuerwerken sowie Sende- und Empfangsvorgänge für abgesetzte dezentrale Steuerwerke, aufweisen, dadurch gekennzeichnet, daß dem Buszuteiler zusammen mit einem Busanforderungssignal ein jeweils die Art der zu übertragenden Daten angebendes Kennzeichen gegeben wird, daß in dem Buszuteiler in Zuordnung zu den Schalteinrichtungen in Abhängigkeit von diesem Kennzeichen Angaben über den zeitlichen Ablauf von einzeln intern in den Schalteinrichtungen im Anschluß an jeweils einen Datenübertragungsvorgang stattfindenden Verarbeitungsvorgängen speicherbar (C1 - C8) sind, und daß der Buszuteiler bei der Zuteilung der Datenbusleitung an eine diese anfordernde Schalteinrichtung, welche Daten an eine andere Schalteinrichtung zu übertragen und/oder von ihr anzufordern, abzurufen und/oder zu empfangen hat, für diese andere Schalteinrichtung gespeicherte Angaben über den zeitlichen Ablauf von intern in ihr stattfindenden Verarbeitungsvorgängen auswertet und aufgrund dessen dieser angeforderten Zuteilung nach Maßgabe dieser Angaben zeitlich eine oder mehrere andere Zuteilungen so vorordnet, daß vor einer Übertragung der Daten an die andere Schalteinrichtung oder von der anderen Schalteinrichtung gleichzeitig einerseits der jeweilige interne Verarbeitungsvorgang in der anderen Schalteinrichtung und andererseits mindestens eine anderweitige Zuteilung für mindestens einen Datenübertragungsvorgang und dieser Datenübertragungsvorgang selbst abgewickelt wird.

**Claim**

Circuit arrangement for telecommunication exchanges, in particular for telephone exchanges, with centralized and/or partly centralized switching facilities (MU, PU, PT, MDD, MTD, MB), for example processors, memories, subcontrol devices and buffer facilities for decentralized control devices, which can be connected to a common data bus (CSB) for two-way transmission of data, and the connection of which is controlled on the basis of bus request signals, emitted by in each case one of the switching facilities, by a bus arbiter (BA) assigned to the data bus, and which have, apart from a time requirement for the emission and for the acceptance of data transferred by the data bus, a data-processing time requirement for internal processing operations, for example Boolean operations in processors as well as writing and reading operations in memories as well as control sequences in subcontrol devices as well as sending and receiving operations for remote decentralized control devices, characterized in that the bus arbiter is given, together with a bus request signal an identifier, specifying in each case the type of data to be transferred, in that details of the time sequence of processing operations individually taking place internally in switching facilities after the completion of a data transfer operation in each case can be stored (C1 - C8) in the bus arbiter in assignment to the switching facilities in dependence on this identifier, and in that, in the assignment of the data bus to a switching facility which is requesting it and which has to transfer data to another switching facility and/or has to request, call and/or receive data from it, the bus arbiter evaluates details on the time sequence of processing operations taking place internally in it, and, on the basis of this sequence, arranges for one or more other assignments to precede in time this requested assignment, according to these details, such that, before a transfer of the data to the other switching facility or from the other switching facility, on the one hand, the respective internal processing operation in the other switching facility and on the other hand at least one other assignment for at least one data transfer operation and this data transfer operation itself are executed simultaneously.


**Revendication**

Montage pour des centraux de télécommunications, notamment des centraux téléphoniques, comportant des dispositifs de commutation centraux et/ou partiellement centraux (MU, PU, PT, MDD, MTD, MB), par exemple des processeurs, des mémoires, des unités de commande partielle et des dispositifs tampons pour des unités décentralisées de commande, qui peuvent être raccordées, pour la transmission réciproque de données, à une ligne commune (CSB) formant ligne de transmission de données, et dont le raccordement est commandé par un dispositif (BA) d'affectation du bus, associé à la ligne formant bus de transmission de données, sur la base de signaux de demandes d'accès au bus délivrés par l'un des dispositifs de commutation, et qui ont, en dehors d'un besoin de temps pour la délivrance ainsi que la réception de données transmises par l'intermédiaire de la ligne formant bus de transmission de données, un besoin en temps pour le traitement des données pour des processus internes de traitement, par exemple des processus de combinaison dans des processeurs ainsi que des processus d'enregistrement et de lecture dans des mémoires et des cycles de commande dans des unités de commande partielle ainsi que des processus d'émission et de réception pour des unités étagées et décentralisées de commande, caractérisé par le fait qu'un indicatif indiquant respectivement le type des données devant être transmises est envoyé, conjointement avec un signal de demande d'accès au bus, au dispositif d'affectation du bus, qu'en association avec les dispositifs de commutation et en fonction de cet indicatif, des indications concernant le déroulement dans le temps de processus de traitement se déroulant individuellement à l'intérieur des dispositifs de commutation à la suite d'un processus respectif de transmission de données peuvent être mémorisées (c1-c8) dans le dispositif d'affectation du bus, et que, lors de l'affectation de la ligne formant bus de transmission de données à un dispositif de commutation, qui demande cette ligne et doit transmettre des données à un autre dispositif de commutation et/ou demander des données à ce dispositif, appeler des données et/ou en recevoir de la part de ce dispositif, le dispositif d'affectation du bus évalue des indications mémorisées pour cet autre dispositif de commutation et concernant le déroulement dans le temps de processus de traitement se déroulant à l'intérieur de ce dispositif et, sur la base de l'affectation demandée à ce dispositif et en fonction de ces indications, fait passer en premier une ou plusieurs autres affectations de telle sorte qu'avant une transmission des données en direction ou en provenance de l'autre dispositif de commutation, d'une part le processus interne respectif de traitement dans l'autre dispositif de commutation et d'autre part au moins une autre affectation pour au moins un processus de transmission de données et ce processus de transmission de données lui-même se déroulent simultanément.